# EUROPEAN PATENT SPECIFICATION

(11) **EP 2 684 669 B1**
(45) Date of publication and mention of the grant of the patent: **31.08.2016**
(21) Application number: 12184006.0
(22) Date of filing: 12.09.2012
(51) Int. Cl.: B29C 45/37, B29C 45/14, B29L 11/00, B29L 31/00

(54) **A method for manufacturing of injection moulds for plastic pyramidal packagings with a label area and an injection mould for plastic pyramidal packagings with a label area**
Verfahren zum Herstellen von Spritzformen für Kunststoffpyramidenverpackungen mit einem Etikettenbereich und Spritzform für Kunststoffpyramidenverpackungen mit Etikettenbereich
Procédé de fabrication de moules d'injection pour emballages pyramidales en plastique avec une zone d'étiquette et moule par injection pour emballages pyramidaux en plastique avec une zone d'étiquette

(30) Priority: 13.07.2012 PL 39993112
(43) Date of publication of application: 15.01.2014
(73) Proprietor: Adamczewski, Marek, 71-075 Szczecin (PL)
(72) Inventor: Adamczewski, Marek, 71-075 Szczecin (PL)
(74) Representative: Eupatent.pl

(56) References cited:
- WO-A1-2011/095932
- DE-A1-102007 007 409
- JP-A- 2005 047 155
- US-A- 5 695 346
- US-A1- 2004 096 601
- US-A1- 2005 053 737

## Description

The present invention relates to a method for manufacturing of injection moulds for plastic pyramidal packagings with a label area and to an injection mould for plastic pyramidal packagings with a label area.

A packaging, in its marketing function, is to attract the attention of a potential customer and to encourage the client to purchase the product. In order to achieve this effect, more and more interesting packaging forms are projected. One of examples of this type of packaging may be decorative packagings.

There are known decorative packagings with a label with a three-dimensional effect. The 3D effect can be obtained by lenticular lens, comprising an array of lenses arranged next to the other, which influence the perception of a lenticular image positioned behind the lens. An oval shape of the lenses results in that when the viewing angle of the image through the lenticular lens is changed, the perceived fragments of the image are changed as well. A lenticular image adapted to be viewed with lens perpendicular to the line passing through the eyes of the viewer creates a three-dimensional impression. A lenticular image adapted to be viewed with lens parallel to the line passing through the eyes of the viewer creates an impression of image animation when changing the viewing angle. In order to obtain a correct view of the lenticular image, the lenticular lens should have dimensions, especially radius and height, adapted to the parameters of the lenticular image, i.e. the lenticular lens should be compatible with the lenticular image.

WO 2011/095932 A1 discloses a method for manufacturing of injection moulds for plastic frustoconical packages with a label area and with lenticular lens, in which a two-part mould is prepared, wherein the first part of the mould has a socket shaped correspondingly to the outer surface of the packaging wall and contains grooves corresponding to the inverse shape of the lenticular lens, and wherein the second part of the mould has a piston shaped correspondingly to the inner surface of the packaging wall and is intended to receive a label comprising a print with a lenticular image compatible with the grooves of the socket of the first part of the mould and with a label image.

US 2005/053737 A1 discloses a plastic package having a 3D label, having an insert of lenticular lens material bonded or otherwise attached to it.

US 5 695 346 A discloses a method of fabricating plastic objects, where images are placed or printed on the back surface of a lenticular lens plate.

US 2004/096601 A1 discloses a container with a lenticular lens system integrally formed in a clear sidewall, on which a label in adhered to through an adhesive layer

DE 10 2007 007409 A1 discloses an in-mould decoration moulding tool, with a metal layer, which is harder than the material of the mould upper part and the mould lower part. The surfaces are defined with a coarse structure and a fine structure.

JP 2005 047155 A discloses an injection-moulded decorative moulding with a convex lens which does not use a lens sheet, the lenses being instead formed through several hemispherical concave parts which are shaped on a mould surface or on a steel plate, which is then attached to the mould surface.

A Polish Patent Application PL385696 presents a method for manufacturing of labelled packagings with a 3D effect. The packaging is manufactured by injection moulding, wherein a monolithic transparent raw material is injected into a mould consisting of two parts. On a piston of one part of the mould, there is a label containing lenticular image conforming to a socket of the second part of mould that contains a number of cylindrical, parallel longitudinal grooves. The packaging manufactured in this way has a shape of cylinder and the lenticular lens are formed perpendicularly to its base.

During transport or storage of this type of empty packagings, they have to be placed in piles one on another, which takes much space and results in high cost of transport and storage. It is known that it would be more efficient to manufacture a packaging having a shape which narrows towards its base, such as to enable placement of one packaging inside another for transport purposes.

In turn, pyramidal-shaped packaging is much more useful, i.e. a packaging having a square or rectangular base and side walls contracting towards the base. It would be further preferable for such packaging to have a label area, i.e. an area that is deprived of lenticular lens and does not alter the visibility of the image of the label, such that the image can be read e.g. by automatic readers, such as bar-code readers.

The Polish patent application PL385696 does not disclose a method for manufacturing the mould for the cylindrically shaped packaging. However, it is commonly known that a socket of such a mould can be produced by drilling out a hole in a metal block, a diameter slightly smaller than the outer diameter of the packaging, and then milling a set of parallel, semicircular grooves in the wall of this hole, the grooves being parallel to the axis of the hole and having a shape of inverted lenticular lens to be formed on the external surface of the wall of formed packaging.

However, the use of analogous technique to manufacture a packaging with an inclined wall that is tapered towards the bottom base, would be complex, as it requires a very precise milling in the direction deviated from the main axis of the socket and adjusted individually for each groove.

Therefore, it would be advantageous to simplify the method for manufacturing of injection moulds for plastic pyramidal packagings with a label area.

The object of the invention is a method for manufacturing of injection moulds for plastic pyramidal packagings with a label area and with lenticular lens, in which a two-part mould is prepared, wherein the first part of the mould has a socket shaped correspondingly to the outer surface of the packaging wall and contains grooves corresponding to the inverse shape of the lenticular lens and a planar label area, and wherein the second part of the mould has a piston shaped correspondingly to the inner surface of the packaging wall and is intended to receive a label comprising a print with a lenticular image compatible with the grooves of the socket of the first part of the mould and with a label image. In the first part of the mould a socket is made in a shape of a truncated pyramid and a metal sheet is cut to the shape of a geometrical development of the side walls of the truncated pyramid corresponding to the socket, wherein in the metal sheet grooves are made which are corresponding to the inverse shape of the lenticular lens and positioned within each wall in parallel to each other and perpendicularly to the geometrical base of the particular side wall, wherein on at least one wall of the metal sheet an area is left which is free of grooves and corresponds to the label area, and next the cut metal sheet with the grooves is attached to the side walls of the socket such that the grooved side is faces the inside of the socket.

Another object of the invention is an injection mould for forming plastic pyramidal packagings with a label area and with lenticular lens, the mould comprising two parts, wherein the first part has a socket shaped correspondingly to the outer surface of the packaging wall and contains grooves corresponding to the inverse shape of the lenticular lens and a planar label area, and wherein the second part of the mould has a piston shaped correspondingly to the inner surface of the packaging wall and is intended to receive a label comprising a print with a lenticular image compatible with the grooves of the socket of the first part of the mould and with a label image. The first part of the mould has a socket in a shape of a truncated pyramid, to which there is attached a metal sheet cut to the shape of a geometrical development of the side walls of the truncated pyramid corresponding to the socket, wherein in the metal sheet grooves are made, directed towards the inside of the socket, which are corresponding to the inverse shape of the lenticular lens and positioned within each wall in parallel to each other and perpendicularly to the geometrical base of the particular side wall, wherein on at least one wall of the metal sheet an area is left which is free of grooves and corresponding to the label area.

An advantage of the invention is that the new method for manufacturing of injection moulds allows to manufacture a mould without the necessity to form grooves corresponding to the lenticular lens directly in the socket of the form. In turn, making the grooves in the metal sheet is much easier and allows to obtain the mould of a high dimensional accuracy.

The object of the invention is shown by means of an exemplary embodiment on a drawing, in which:
Figs. 1A-1B show the packaging in a perspective view and in a front view, respectively.
Fig. 2 shows a cross section of a part of the side wall of the packaging.
Fig. 3 presents a view of the mould for use in the process of in-mould labelling.
Fig. 4 shows the metal sheet in its flat configuration with grooves and with a label area on one of the walls.
Fig. 5 shows a diagram of a technology line for carrying out the method according to the invention.

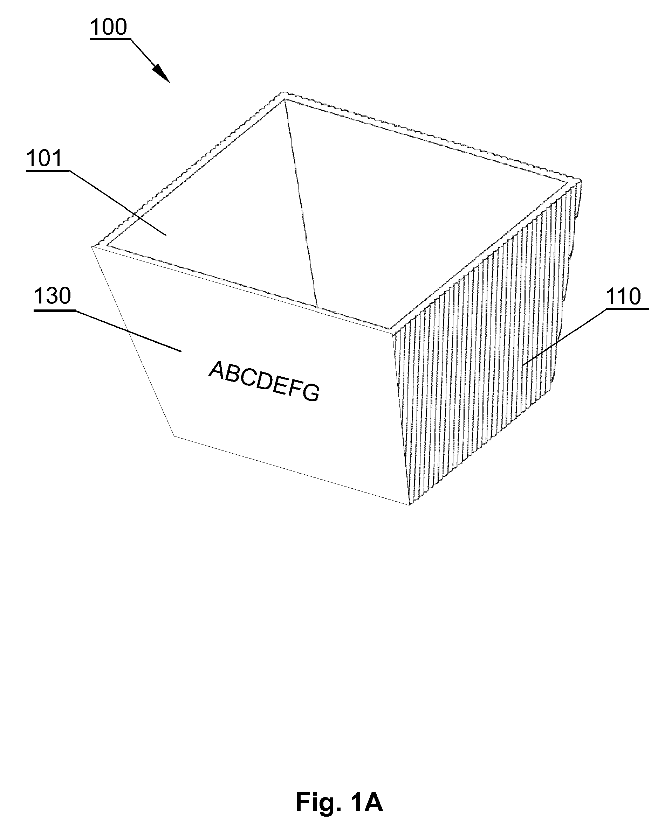

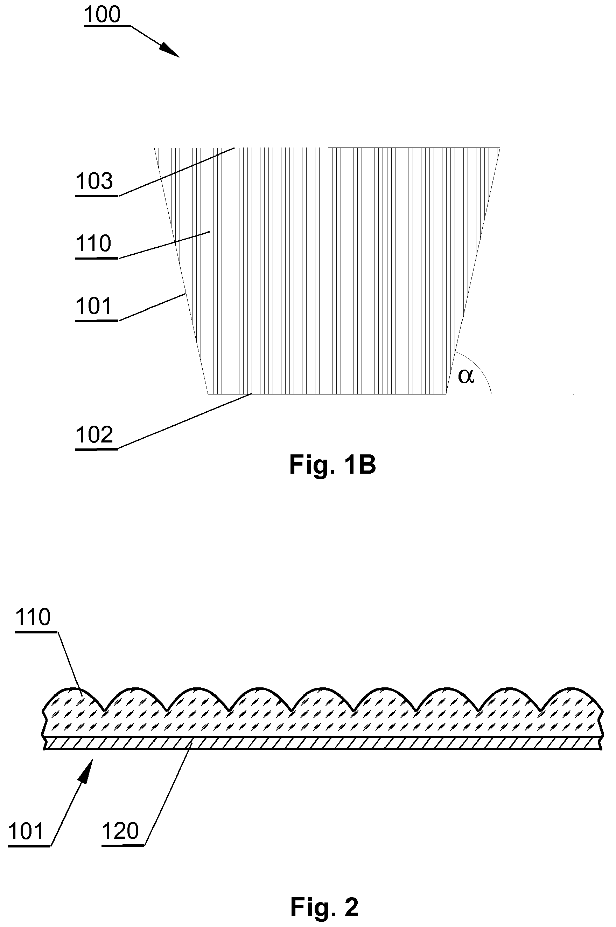

Fig. 1A shows the pyramidal packaging in a perspective view and Fig. 1B shows the packaging in a front view. The packaging 100, manufactured in the process of in-mould labelling (IML), has a shape of a truncated pyramid and is made of transparent plastic. On the outer side of at least one side wall 101 of the packaging 100 there are lenticular lens 110 positioned in parallel to each other and perpendicular to the base of the particular wall. At least part of one of the side walls is free of lenticular lens and forms a label area 130. It is evident that due to technological reasons, the side edges of the packaging can be rounded, and therefore pyramidal packagings according to the invention include packagings which have rounded side slanted edges or rounded edges of the base. The radius of the round-up of the edges in this type of packagings is typically from 0,2 mm to 20 mm and is not higher than 5% of the length of one of the side walls adjacent to a particular edge. The packagings of this type usually comprise further a flange at its base.

The smaller base 102 of the packaging 100 may be open or closed with a lid or a material integrated with the side wall.

The larger base 103 of the packaging may be open or closed with a lid or material integrated with the side wall.

In one form of the packaging, the acute angle α of the inclination of each side wall 101 with respect to the base plane 102 is at least 45°.

In other form of the packaging, the acute angle α of the inclination of each side wall 101 with respect to the base plane 102 is at least 60°.

In another form of the packaging, the acute angle α of the inclination of each side wall 101 with respect to the base plane 102 is at least 80°.

Fig. 2 shows a cross section of a part of a side wall of the packaging. The side wall 101 of the packaging is integrated from the inner side in the process of injection moulding with a label 120 having a print containing the lenticular image. In the outer surface of the side wall 101, there are formed lenticular lens 110 to enable viewing of the lenticular image of the label 120. The lenticular lens 110 are compatible with the lenticular image of the label 120, that is to say they have their radius and height adapted to the parameters of the lenticular image.

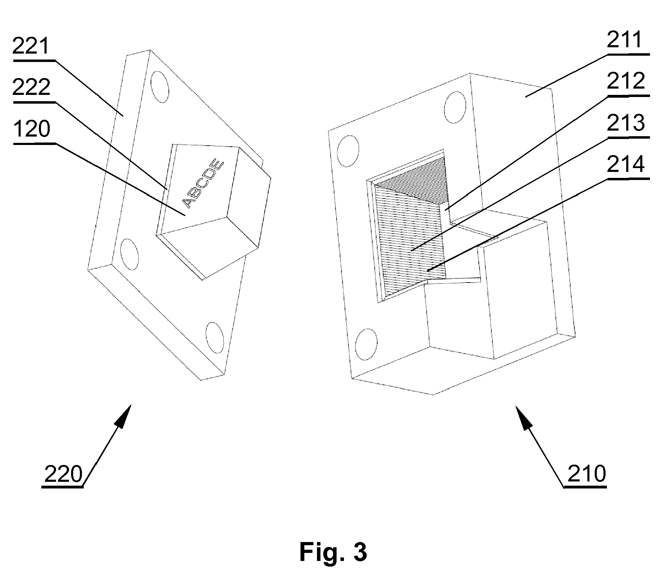

Fig. 3 presents a view of an open mould for forming the packaging. The mould contains two parts 210, 220. The first part 210 comprises a body 211 and a socket 212 formed therein and having grooves 213 that have the shape of inverse of the lenticular lens 110 to form the outer surface of the side wall 101 of the packaging 100. The second part 220 of the mould comprises a body 221 and a piston 222 conforming to the inner surface of the side wall 101 of the packaging 100.

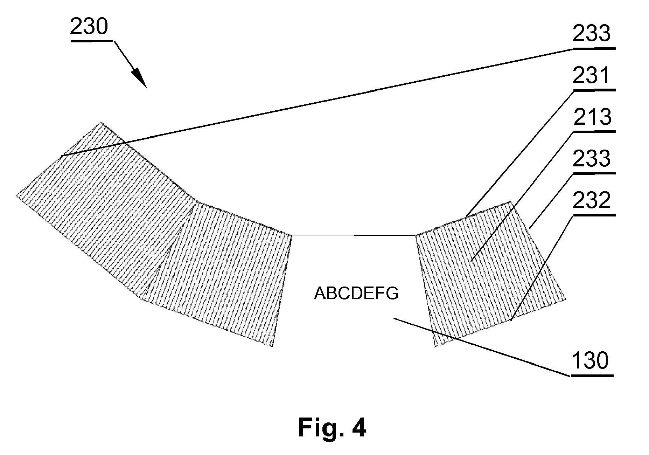

The mould is manufactured such that in the body 211 of the first part 210 of the mould a socket 212 is made and the side walls of the socket 212 are covered by a metal sheet 230. The metal sheet 230 is prepared in such a way that in a flat sheet having a shape of a geometric development of the shape of the truncated pyramid, grooves 213 are made parallel to each other in such a way that, for each wall of the pyramid, the grooves are arranged perpendicularly to the geometrical base of each wall. Then, the opposite side edges 233 of the metal sheet are joined with one another by folding the sheet along the edges between walls and the folded sheet is inserted into the socket 212. The sheet 230 with grooves 213 is shown in Fig. 4. Forming the parallel grooves on a flat metal sheet is a much less complex process than forming the grooves directly within the inclined walls of the mould socket 212. The metal sheet 230 can be joined with the body 211 of the first part 210 of the form by gluing or welding.

At least part of one of the side walls is free of lenticular lens and forms a label area 130 for placing therein information forming a label image, which should not be disrupted by the lenticular lens, such as to be readable by automatic readers, for example readers of textual information or bar code readers.

The form is used in such a way that by a label feeder on the piston 222 a label 120 is placed, the label comprising a print of the lenticular image compatible with the grooves 213 of the metal sheet 230 in the socket 212 of the first part 210 of the mould. After the piston 222 is input to the socket 210 of the mould, to the cavity between the piston and socket a transparent plastic is injected, thereby forming the packaging 100 with label 120 integrated with the internal surface of the wall 101 and with lenticular lens 110 on the external surface of the wall 101.

The lenticular lens of the packaging, as shown in Fig. 1A, coincide in the side edges of the packaging. of the metal sheet. This results from the fact that the lens 110 are positioned accordingly to the grooves 213 of metal sheet 230 shown in Fig. 4, which in the vicinity of the side edges of each wall extend between the parallel edges forming the bottom and top base of each wall, and in the other area - from the longer edge of the metal sheet to side edge the wall, wherein the lens run in parallel to each other and are perpendicular to the geometric base of the wall.

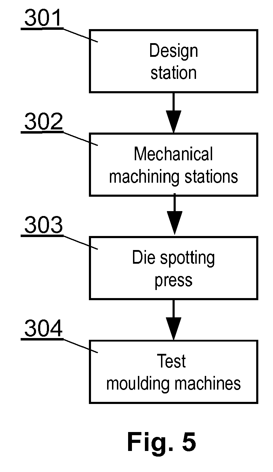

Fig. 5 presents a diagram of a technology line for manufacturing injection moulds according to the method of the invention. Using CAD/CAM/CAE software, a detailed design of the form is created on the design station 301. Next, on machining stations 302, raw metal elements are machined to the shape defined by the design. In particular, there are machined individual components of the mould socket, piston and the metal sheet for laying out the socket. The machining stations 302 should include devices such as:
- a 3-axis milling machine for rough machining and rough drilling of openings in steel plates (which constitute the fixing plates of the mould, support plates, resistant plates, shedders, casings for A and B sides of the mould)
- a 5-axis milling machine for final machining and drilling of plates, A and B sides of the mould and forming inserts,
- a CNC machine for milling forming parts, such as milling grooves in the metal sheet for laying out the socket
- a milling machine for machining small-sized elements, such as forming inserts, slides, small A and B sides of the mould,
- a drilling machine for deep openings and for cooling holes in the elements of the mould,
- a milling machine for making electrodes for erosion machine,
- a wire saw for cutting throughout shapes, such as inserts, openings or small openings for inserts,
- a penetrating drill for machining the forming parts by mapping the electrode in the forming socket, including grooves forming the lens,
- a planar grinding machine for final machining of hardened surfaces of the machined elements,
- a grinding machine for openings,
- a band-saw for cutting large elements to smaller ones, from which form inserts are to be made,
- a laser welding machine for joining the form details,
- a measuring machine for measuring spatially complex elements.

The machined elements are finally machined on a die spotting station 303 with a die spotting press, wherein by means of manual grinders any inaccuracies are removed to obtain the dimensional accuracy of the surfaces closing the forming cavity on a level of +/- 0,02 mm. The final mould is tested in test moulding machines 304, where a test batch of packagings is made, wherein the moulds are tested on moulding machines having different closing strength, for example 450-700 tons, 800-1200 tons and 1300-1600 tons.

## Claims

1. A method for manufacturing of injection moulds for plastic pyramidal packagings with a label area (130) and with lenticular lens, (110) in which a two-part mould is prepared, wherein the first part of the mould (210) has a socket (212) shaped correspondingly to the outer surface of the packaging wall and contains grooves (213) corresponding to the inverse shape of the lenticular lens (110) and a planar label area, and wherein the second part of the mould (220) has a piston (222) shaped correspondingly to the inner surface of the packaging wall and is intended to receive a label (120) comprising a print with a lenticular image compatible with the grooves (213) of the socket of the first part of the mould and with a label image, wherein in the first part of the mould (210) a socket (212) is made in a shape of a truncated pyramid and a metal sheet (230) is cut to the shape of a geometrical development of the side walls of the truncated pyramid corresponding to the socket (212), wherein in the metal sheet (230) grooves (213) are made which are corresponding to the inverse shape of the lenticular lens (110) and positioned within each wall in parallel to each other and perpendicularly to the geometrical base of the particular side wall, wherein on at least one wall of the metal sheet (230) an area is left which is free of grooves (213) and corresponds to the label area (130), and next the cut metal sheet (230) with the grooves (213) is attached to the side walls of the socket (212) such that the grooved side (213) faces the inside of the socket (212).

2. An injection mould for forming plastic pyramidal packagings with a label area (130) and with lenticular lens (110), the mould comprising two parts, wherein the first part (210) has a socket (212) shaped correspondingly to the outer surface of the packaging wall and contains grooves (212) corresponding to the inverse shape of the lenticular lens (110) and a planar label area, and wherein the second part of the mould (220) has a piston (222) shaped correspondingly to the inner surface of the packaging wall and is intended to receive a label (120) comprising a print with a lenticular image compatible with the grooves (213) of the socket of the first part of the mould and with a label image, wherein the first part of the mould (210) has a socket (212) in a shape of a truncated pyramid, to which there is attached a metal sheet (230) cut to the shape of a geometrical development of the side walls of the truncated pyramid corresponding to the socket (212), wherein in the metal sheet (230) grooves (213) are made, directed towards the inside of the socket (212), which are corresponding to the inverse shape of the lenticular lens (110) and positioned within each wall in parallel to each other and perpendicularly to the geometrical base of the particular side wall, wherein on at least one wall of the metal sheet (230) an area is left which is free of grooves (213) and corresponding to the label area (130).

## Patentansprüche

1. Verfahren zur Herstellung von Spritzgussformen für pyramidenförmige Verpackungen aus Kunststoff mit einem Etikettbereich (130) und mit Lentikularlinse (110), in dem eine zweiteilige Form hergestellt wird, wobei der erste Teil der Form (210) eine Aufnahme (212), die entsprechend der Außenfläche der Verpackungswand geformt ist und Rillen (213) enthält, die der umgekehrten Form der Lentikularlinse (110) entsprechen und einen flachen Etikettbereich aufweist, und wobei der zweite Teil der Form (220) einen Kolben (222) aufweist, der entsprechend der Innenfläche der Verpackungswand geformt ist und ein Etikett (120) aufnehmen soll, das einen Druck mit einem Lentikularbild umfasst, das mit den Rillen (213) der Aufnahme des ersten Teils der Form und mit einem Etikettbild kompatibel ist, wobei im ersten Teil der Form (210) eine Aufnahme (212) in der Form einer abgeschnittenen Pyramide gebildet ist und ein Metallbogen (230) in die Form einer geometrischen Entwicklung der Seitenwände der abgeschnittenen Pyramide entsprechend der Aufnahme (212) geschnitten ist, wobei in dem Metallbogen (230) Rillen (213) gebildet sind, die der umgekehrten Form der Lentikularlinse (110) entsprechen und innerhalb jeder Wand parallel zueinander und senkrecht zur geometrischen Basis der entsprechenden Seitenwand positioniert sind, wobei an zumindest einer Wand des Metallbogens (230) ein Bereich frei von Rillen (213) gelassen ist und dem Etikettbereich (130) entspricht, und als nächstes der geschnittene Metallbogen (230) mit den Rillen (213) an den Seitenwänden der Aufnahme (212) angebracht ist, sodass die gerillte Seite (213) dem Inneren der Aufnahme (212) zugewandt ist.

2. Spritzgussform zum Bilden von pyramidenförmigen Verpackungen aus Kunststoff mit einem Etikettbereich (130) und mit Lentikularlinse (110), wobei die Form zwei Teile umfasst, wobei der erste Teil (210) eine Aufnahme (212), die entsprechend der Außenfläche der Verpackungswand geformt ist und Rillen (212) enthält, die der umgekehrten Form der Lentikularlinse (110) entsprechen und einen flachen Etikettbereich aufweist, und wobei der zweite Teil der Form (220) einen Kolben (222) aufweist, der entsprechend der Innenfläche der Verpackungswand geformt ist und ein Etikett (120) aufnehmen soll, das einen Druck mit einem Lentikularbild umfasst, das mit den Rillen (213) der Aufnahme des ersten Teils der Form kompatibel ist und mit einem Etikettbild, wobei der erste Teil der Form (210) eine Aufnahme (212) in einer Form einer abgeschnittenen Pyramide aufweist, an die ein Metallbogen (230) angebracht ist, der in die Form einer geometrischen Entwicklung der Seitenwände der abgeschnittenen Pyramide entsprechend der Aufnahme (212) geschnitten ist, wobei in dem Metallbogen (230) Rillen (213) gebildet sind, die in Richtung des Inneren der Aufnahme (212) gerichtet sind, die der umgekehrten Form der Lentikularlinse (110) entsprechen und innerhalb jeder Wand parallel zueinander und senkrecht zur geometrischen Basis der entsprechenden Seitenwand positioniert sind, wobei an zumindest einer Wand des Metallbogens (230) ein Bereich frei von Rillen (213) gelassen ist und dem Etikettbereich (130) entspricht.

## Revendications

1. Méthode pour la fabrication de moules par injection pour emballages pyramidaux en matière plastique, comprenant une zone pour étiquette (130) et une lentille lenticulaire (110) dans laquelle un moule en deux parties est préparé, la première partie du moule (210) comprenant une douille (212) dont la forme correspond à celle de la surface extérieure de la paroi de l'emballage, et contient des cannelures (213) correspondant à la forme inverse de la lentille lenticulaire (110) et une zone d'étiquette plane, et la deuxième partie du moule (220) comprenant un piston (222) dont la forme correspond à la surface interne de la paroi de l'emballage et est conçue pour recevoir une étiquette (120) comprenant une impression avec un image lenticulaire compatible avec les cannelures (213) de la douille de la première partie du moule, et avec une image d'étiquette, dans la première partie du moule (210) une douille (212) étant réalisée dans la forme d'une pyramide tronquée, et une feuille de métal (230) est coupée sous forme d'un développement géométrique des parois latérales de la pyramide tronquée correspondant à la douille (212), dans la feuille de métal (230) étant formées des cannelures (213) correspondant à la forme inverse de la lentille lenticulaire (110) et positionnées au sein de chaque paroi, parallèlement les unes aux autres et perpendiculairement à la base géométrique de la paroi latérale particulière, sur au moins une paroi de la feuille de métal (230) étant laissée une zone dénuée de cannelures (213) et correspondant à la zone de l'étiquette (130), et à côté de la feuille de métal (230) coupée avec les cannelures (213) étant fixée sur les parois latérales de la douille (212) de sorte que le côté cannelé (213) soit tourné vers l'intérieur de la douille (212).

2. Moule par injection pour la formation d'emballages pyramidaux en matière plastique, comprenant une zone pour étiquette (130) et une lentille lenticulaire (110), le moule comprenant deux parties, la première partie (210) comprenant une douille (212) dont la forme correspond à celle de la surface extérieure de la paroi de l'emballage et contient des cannelures (212) correspondant à la forme inverse de la lentille lenticulaire (110) et une zone d'étiquette plane, et la deuxième partie du moule (220) comprenant un piston (222) dont la forme correspond à la surface interne de la paroi de l'emballage et est conçue pour recevoir une étiquette (120) comprenant une impression avec un image lenticulaire compatible avec les cannelures (213) de la douille de la première partie du moule, et avec une image d'étiquette, la première partie du moule (210) comprenant une douille (212) ayant la forme d'une pyramide tronquée, sur laquelle est fixée une feuille de métal (230) coupée sous forme d'un développement géométrique des parois latérales de la pyramide tronquée correspondant à la douille (212), dans la feuille de métal (230) étant formées des cannelures (213) tournées vers l'intérieur de la douille (212) et correspondant à la forme inverse de la lentille lenticulaire (110) et positionnées au sein de chaque paroi, parallèlement les unes aux autres et perpendiculairement à la base géométrique de la paroi latérale particulière, sur au moins une paroi de la feuille de métal (230) étant laissée une zone dénuée de cannelures (213) et correspondant à la zone de l'étiquette (130).
